# EUROPEAN PATENT APPLICATION

(11) **EP 1 106 582 A2**
(43) Date of publication of application: **13.06.2001**
(21) Application number: 00122419.5
(22) Date of filing: 13.10.2000
(51) Int. Cl.: C03B 19/10, C01B 33/18

(54) **Silica soot and process for producing it**

(30) Priority: 10.12.1999 US 458898
(71) Applicant: Corning Incorporated, Corning, New York 14831 (US)
(72) Inventor: Gitimoy, Kar, Corning Incorporated, Corning, NY 14831 (US); Chunzhe, Charles Yu, Corning Incorporated, Corning, NY 14831 (US)
(74) Representative: Boon, Graham Anthony

(57) **Abstract**

This process generates silica soot by a unique flame hydrolysis or flame combustion process under a specially designed environment. High purity silicon compounds are introduced into an oxygen-hydrocarbon, or oxygen-hydrogen flame, to generate silica intermediates in an insulated enclosure which is maintained at temperatures above 1600°C. The silica intermediates include "seeds" of solid silicon dioxide. The silica intermediates experience prolonged residence time under high temperature (≥ 1600°C) within the enclosure. During the prolonged residence time, the solid silicon dioxide "seed" grows and sinters simultaneously before exiting the enclosure resulting in high purity, dense, spherical particles.

## Description

### TECHNICAL FIELD

The invention relates to a process for producing high purity, dense silica soot. More specifically, the process uses a unique flame step.

### BACKGROUND ART

Polishing advanced materials has become an exceedingly critical aspect of final part formation for the glass and microelectronics industries. Silica and alumina colloids are formed through various techniques and typically require expensive precursor materials in order to ensure the highest purity products. Solutions are stabilized with buffer systems to pH and solids loading values that result in optimal surface finish attainment. Particle size distribution can be adjusted to control the final surface finish, as well as the ability to clean residue abrasive particles from workpiece surfaces after processing.

Numerous fine size (submicron) silica articles, such as Cab-O-Sil (by Cabot Corporation), Aerosil (by Degussa), Ludox (by Du Pont) are commercially available. Conventional silica typically has an average particle size of 50 nanometers (nm) or less. While these fine size silica articles have their advantages, we have found the larger particle size silica soot of this invention to have their own unique properties and uses.

### DISCLOSURE OF INVENTION

Unlike other production process, the process of this invention generates the silica soot by a unique flame hydrolysis or flame combustion process under a specially designed environment. High purity silicon compounds are introduced into an oxygen-hydrocarbon, or oxygen-hydrogen flame, to generate silica intermediates in an insulated enclosure which is maintained at temperatures above 1600°C. The silica intermediates include "seeds" of solid silicon dioxide, gaseous silicon monoxide, and other intermediate silicon containing compounds from the flame hydrolysis or flame combustion reactions. The insulating enclosure is designed in such a way that the silica intermediates experience prolonged residence time under high temperature (≥ 1600°C) within the enclosure. During the prolonged residence time, the solid silicon dioxide "seed" grows and sinters simultaneously before exiting the enclosure. Due to this unique processing approach and the selection of high purity starting chemicals, the silica soot consists of high purity, dense, spherical particles of 0.02 - 0.4 microns (average size 0.2 microns).

### BRIEF DESCRIPTION OF THE DRAWINGS

Fig. 1 is a SEM micrograph of the silica soot of this invention.
Fig. 2 is a TEM micrograph of the silica soot of this invention.
Fig. 3 is a schematic drawing of a furnace used to produce the soot of this invention.

### BEST MODE OF CARRYING OUT INVENTION

The process of this invention produces high purity, dense silica (HPFS®) soot. The process comprises the steps of providing a furnace and maintaining it at temperatures above 1600°C. We then introduce an oxygen-hydrocarbon or oxygen-hydrogen flame into the furnace followed by introducing high purity silicon compounds into the flame. This generates high purity silica intermediates. We then keep the silica intermediates under prolonged residence times at the temperature above 1600°C. This grows and sinters the silica intermediates simultaneously into high purity, dense silica soot before exiting the furnace. The flame produces the silica intermediates by flame hydrolysis or flame combustion reactions. The silica intermediates include seeds of solid silicon dioxide, gaseous silicon monoxide and other intermediate silicon containing compounds. The solid silicon dioxide seeds grow and sinter simultaneously into the high purity, dense silica soot before exiting the furnace.

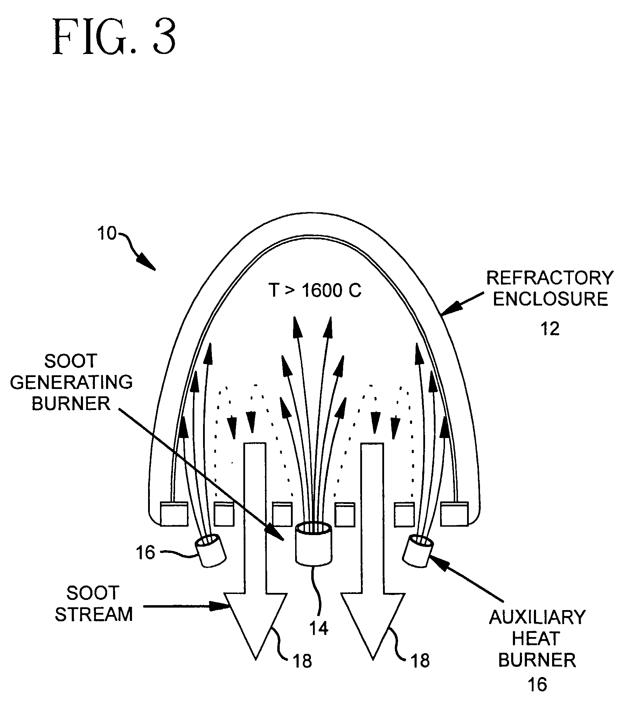

Fig. 3 is a schematic drawing of a furnace for producing the silica soot of this invention. Fig. 3 shows furnace 10 including refractory enclosure 12, soot generating burner 14, auxiliary heat burners 16 and soot streams 18. Furnace 10 maintains temperatures above 1600°C.

Broadly, the silica soot particulate from soot stream 18 has an average particle size ranging from above 20 nm to 500 nm. More specifically, the silica soot has an average particle size ranging from 100 nm to 400 nm. Preferably, the silica soot has an average particle size ranging from 250 nm to 350 nm. More preferably, the silica soot has an average particle size of about 300 nm. We also prefer that the silica soot have a spherical morphology.

Generally, the soot has a specific surface area of 20m²/g or less. Preferably, the specific surface area is 10 to 20m²/g and more preferably the surface area is 15 to 20 m²/g. Particle size and surface area dimension are understood to be greater than zero.

Conventional gas fired or electrically heated means may be used as auxiliary heat burners 16 to heat an insulated enclosure such as refractory enclosure 12. The oxy-fuel burners used for soot generating burner 14 also are known in the art. A typical oxy-fuel burner is a two million BTU/hr. burner. The two million BTU burner develops the following kinetic energy express in ft/lbs/sec:

| | |
|---|---|
| 400 ft/sec | 356 ft-lbs/sec |
| 800 ft/sec | 1424 ft-lbs/sec |
| 1173 ft/sec | 2530 ft-lbs/sec. |

These burners amply provide the required temperatures above 1600°C.

Generally, the silica soot of this invention has a density of at least 1 g/cc. Preferably, the density is at least 2 g/cc.

Table 1 is a trace elemental analysis of the silica soot showing the soot to be a high purity silica.

**TABLE 1**

| | | |
|---|---|---|
| Ba, Na, Zr | Al, Ca, Co, Ni | Fe, Mg, Ti |
| <0.01 wt% | <0.003 wt% | <0.001 wt% |

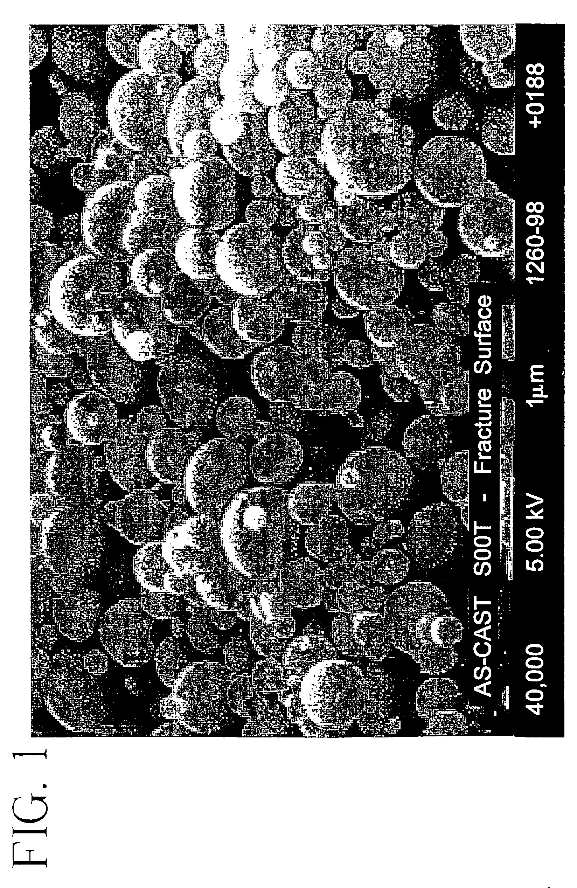

Fig. 1 is an SEM micrograph showing the particle of the silica soot (HPFS®). The SCM shows the particles to be spherical with size ranging from 50 nm to 300 nm.

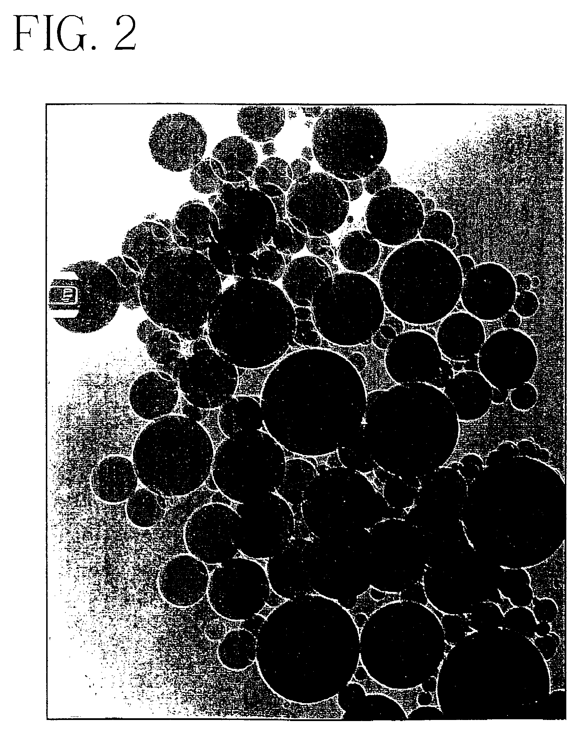

Fig. 2 is a TEM micrograph showing the particles of the HPFS® soot. The TEM show the particles to be spherical with size ranging between 20 nm and 400 nm.

With these outstanding characteristics, the silica soot becomes an excellent starting material of various high-tech ceramic productions, as the following examples illustrate.

### Example 1 - high purity substrate for high temperature application

The soot can be processed into pellets, plates or various shaped containers by conventional ceramic processes such as casting, palletizing, spray drying, and extrusion, to form high purity substrates or furniture for high temperature applications.

### Example 2 - high solid loading aqueous suspension

The dense and spherical nature, coupled with the appropriate size range of HPFS® soot makes it possible to produce highly stable, low viscous aqueous based suspension with high solid loading (up to 75 wt%) without the need for organic/polymer stabilizer. Coupled with its high purity, such silica suspension would be valuable for ceramic batch formulation, and useful as casting slip.

### Example 3 - near net shape, low shrinkage silica body

Utilizing its dense, spherical nature and its appropriate size range, HPFS® soot has been processed by vacuum casting into desired shapes with green density of 70% theoretical value. As a result, the sintering linear shrinkage of such green body is below 12%, as compared to the normal linear shrinkage rate of above 17% when conventional silica powder is used.

### Example 4 - dry glass for infrared window application

Water (beta-OH) content in the glass has strong absorption for infrared light. Dry HPFS® glass has been made with beta OH level below 1 ppm (detection limit) thus make it applicable for IR window application.

### Example 5 - UV transmitting glass

UV transmitting glass (>90% transmission at 248 nm) has been made from HPFS® soot. Fig. 3 shows the transmission curve of HPFS® "soot" glass to be greater than 90%. Greater than 90% transmission was achieved from 248nm through 400nm.

### Example 6 - complex shapes of silica bodies

The dense, spherical nature of the HPFS® soot with its appropriate size distribution makes it possible to be formulated into paste of right consistency applicable for extrusion. Complex honeycomb structures of high purity silica can be readily made, and have a variety of applications such as bio-reactor, capillary flow controller, high efficiency filtration system, membrane reactor, in-situ water management, microlens array, light weight mirror support and specialty dielectric materials.

### Example 7 - polishing applications

Retaining the same physical properties as the parent glass and having a spherical morphology, the silica soot is an ideal candidate for polishing applications. The soot has a large particle size when compared to conventional colloidal or fumed silica. As a result, the large size produces less surface damage and allows for a higher (faster) removal rate. The large particle size also results in super polished surfaces.

For example, a method for final polishing silica substrates comprises the steps of providing a silica substrate, first polishing a surface of the substrate with an aqueous solution of at least one metal oxide abrasive to a surface roughness Ra ranging from 6 to 10Å, and further polishing the surface of the substrate with an aqueous solution of the silica soot to a surface roughness Ra of 5Å or less. Preferably, a hard polishing pad carries out the first polishing step and a soft polishing pad carries out the further polishing step.

Polishing experiments were as follows. Samples of fused silica glass were machined via grinding and lapping processes to form a flat surface with minimal subsurface damage. A first polishing step was applied using a cerium oxide abrasive (Ferro Corporation), Product Code 482), and a hard polishing pad (Rodel Incorporated, Product Code MHC-14B), thus generating a surface finish of Ra=8Å. Solutions prepared from the soot were buffered using a potassium-based solution between pH 10-11. The solution was used in combination with a soft polishing pad (Rodel Incorporated, Product Code 204). Final surface finishes were measured using an atomic force microscope to have a surface roughness of Ra of approximately 5Å. Of particular interest in the results was the removal of large scratches by the soot. The beneficial effect of this scratch removal is believed to be the result of the large particle size of the soot.

The soot material is ideal for polishing applications in the glass and microelectronics industries. Results show the attainment of a final surface finish with Ra of 5Å. AFM images of final polishing surfaces suggest that the soot is particularly successful in removing large scratches that are remnant from previous polishing steps.

In addition to these embodiments, persons skilled in the art can see that numerous modifications and changes may be made to the above invention without departing from the intended spirit and scope thereof.

## Claims

1. A process for producing high purity, dense silica soot comprising the steps of:
providing a furnace;
maintaining the furnace at temperatures above 1600°C;
introducing an oxygen-hydrocarbon or oxygen-hydrogen flame into the furnace;
introducing high purity silicon compounds into the flame;
generating high purity silica intermediates;
keeping the silica intermediates under prolonged residence times at the temperature above 1600°C; and
growing and sintering the silica intermediates simultaneously into high purity, dense silica soot before exiting the furnace.

2. A process according to claim 1 wherein the flame produces the silica intermediates by flame hydrolysis or flame combustion reactions.

3. A process according to claim 1 wherein the flame produces the silica intermediates which include seeds of solid silicon dioxide, gaseous silicon monoxide and other intermediate silicon containing compounds.

4. A process according to claim 3 wherein the solid silicon dioxide seeds grow and sinter simultaneously into the high purity, dense silica soot before exiting the furnace.

5. A process according to claim 1 wherein the silica intermediates grow into high purity, dense, spherical silica soot.

6. A process according to claim 1 wherein the silica intermediates grow into silica soot.

7. A process according to claim 1 wherein the silica intermediates grow into silica soot having an average particle size ranging from 20nm to 500nm.

8. A process according to claim 1 wherein the silica intermediates grow into silica soot having an average particle size ranging from 100 nm to 400 nm.

9. A process according to claim 1 wherein the silica intermediates grow into silica soot having an average particle size ranging from 250 nm to 350 nm.

10. A process according to claim 1 wherein the silica intermediates grow into silica soot having an average particle size of about 300 nm.

11. A process according to claim 1 wherein the silica intermediates grow into silica soot having a specific surface area of 20m²/g or less.

12. A process according to claim 1 wherein the silica intermediates grow into silica soot having a specific surface area of 10 to 20m²/g.

13. A process according to claim 1 wherein the silica intermediates grow into silica soot having a specific surface area of 15 to 20m²/g.

14. A process according to claim 1 wherein the silica intermediates grow into silica soot having a density of at least 1 g/cc.

15. A process according to claim 1 wherein the silica intermediate grow into silica soot having a density of at least 2 g/cc.

16. High purity, dense silica soot produced according to the process of claim 1.

17. High purity, dense silica soot having a density of at least 1 g/cc.

18. Silica soot according to claim 17 having a density of at least 2 g/cc.
